## Europäisches Patentamt
## European Patent Office
## Office européen des brevets

(11) Veröffentlichungsnummer: **0 167 789**
**B1**

(12) # EUROPÄISCHE PATENTSCHRIFT

(45) Veröffentlichungstag der Patentschrift:
25.01.89

(21) Anmeldenummer: 85106730.6

(22) Anmeldetag: 31.05.85

(51) Int. Cl.⁴: **C 25 C 3/06,** C 01 F 7/00,
C 01 F 7/06, C 01 F 7/34

(54) Verfahren zur Rückgewinnung von Aluminium aus Krätzen.

(30) Priorität: 08.06.84 AT 1895/84

(43) Veröffentlichungstag der Anmeldung:
15.01.86 Patentblatt 86/3

(45) Bekanntmachung des Hinweises auf die Patenterteilung:
25.01.89 Patentblatt 89/4

(84) Benannte Vertragsstaaten:
DE FR GB IT

(56) Entgegenhaltungen:
DE-C-887 270

Die Akte enthält technische Angaben, die nach dem Eingang der Anmeldung eingereicht wurden und die nicht in dieser Patentschrift enthalten sind.

(73) Patentinhaber: **Austria Metall Aktiengesellschaft,**
**A-5282 Braunau am Inn (AT)**

(72) Erfinder: **Haberfellner, Ernst, Ing.,**
**Wagnerbauerstrasse 19, A-5280 Braunau (AT)**

(74) Vertreter: **Hain, Leonhard, Dipl.- Ing., Tal 18/IV,**
**D-8000 München 2 (DE)**

EP 0 167 789 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft ein Verfahren zur Rückgewinnung von Aluminium aus Krätze zum Wiedereinsatz in Elektrolysezellen.

Es ist bekannt, die bei der Aluminiumschmelzflußelektrolyse anfallende Aluminiumkrätze durch Zerkleinern, wie Mahlen, in eine grobe Körnung mit einem hohen Aluminiummetallgehalt und in einen metallarmen, aber oxidreichen Krätzestaub aufzubereiten (DE-C-887 270) Aus der an Aluminium reichen Fraktion kann in einem Schmelzofen wieder einsatzfähiges Aluminium ausgeschmolzen werden, wobei die Schmelzrückstände auch Salzschlacke enthalten können. Der Krätzestaub, der ebenfalls noch erhebliche Anteile an metallischem Aluminium und Aluminiumoxid enthält, wird bisher wegen seiner vielen die Elektrolyse störenden Substanzen als unverwertbarer Abfall auf die Halde gegeben. Es ist an sich bekannt, Carbide, Nitride und Chloride durch Behandlung mit Heißwasser zu beseitigen, wobei die Carbide und Nitride unter Abspaltung von Methan- bzw. Ammoniakgas in Aluminiumhydroxid übergeführt werden. Auch die Chloride von den Schmelzsalzzusätzen lassen sich auflösen. Der aufbereitete Krätzestaub enthält außerdem noch je nach seiner Herkunft Magnesium, vorwiegend als Oxid, das die Schmelzflußelektrolyse stört, weil dadurch die Dichte der Schmelze ansteigt und sich das Aluminium nicht mehr absetzt. Weiterhin wird das Magnesium auch teilweise kathodisch abgeschieden.

Der Erfindung liegt daher die Aufgabe zugrunde, ein Verfahren vorzuschlagen, das die Rückgewinnung von Aluminium auch aus dem aufbereiteten Krätzestaub ermöglicht.

Zur Lösung dieser Aufgabe wird ein durch einen Zerkleinerungsvorgang erhaltener Krätzestaub gemäß dem Verfahren nach Patentanspruch 1 behandelt.

Erfindungsgemäß wird danach zur Entfernung der Verbindungen des Magnesiums und anderer Oxide sowie auch verschiedener Aluminiumsilikate der Krätzestaub mit heißer, verdünnter Schwefelsäure behandelt. Dabei wird auch ein Teil des metallischen Aluminiums gelöst, das aber bei einer nachfolgenden Neutralisation des schwefelsauren Abwassers wieder als Hydroxid rückgewonnen werden kann. Nach Filtration und Waschen des so aufbereiteten Krätzestaubes kann dieser nach dem Kalzinieren wieder der Elektrolysezelle zugeführt werden. Wegen der pH-Abhängigkeit des Trennvorganges von Aluminium und Magnesium wird das schwefelsaure Abwasser mit verdünnter Lauge unter Rühren vorzugsweise auf einen pH-Wert 6 - 7 eingestellt. Dabei wird das Aluminiumsulfat als Hydroxid ausgefällt, während das Magnesiumsulfat noch in Lösung bleibt. Nach Filtration, Waschen und Kalzinieren wird das Aluminiumoxid ebenfalls der Schmelzflußelektrolyse zugeführt. Neben den Oxiden des Magnesiums bzw. dem vorhandenen metallischen Magnesium werden durch den schwefelsauren Aufschluß noch andere metallische Oxide, wie $ZnO$, $Fe_2O_3$, $CuO$ und $TiO_2$, teilweise aufgelöst. Nicht aus dem Krätzestaub entfernt werden eventuell vorhandene Siliziumverbindungen, wie Quarz, Mullit sowie Spinelle.

## Beispielsbeschreibung

Ein Beispiel eines Verfahrensablaufes ist im beiliegenden Blockdiagramm dargestellt:

1. Eine metallarme Siebfraktion bzw. ein Krätzestaub mit einer Korngröße von etwa < 1,0 mm wird zusammen mit aufbereiteten Schmelz- und Salzrückständen aus einem Schmelzofen 2 in einen Reaktionsbehälter 1 eingebracht.

2. In einer ersten Verfahrensstufe im Reaktionsbehälter wird der Krätzestaub mit den Salzrückständen mit Heißwasser von etwa 96°C und mit etwa dem Fünffachen des Krätzestaubvolumens in zwei Stufen zwecks Zerlegung der Karbide und Nitride und Auflösung der Schmelzofen-Salze behandelt.

3. Hierauf wird dieser Behälterinhalt mittels eines Vakuumfilters 3 filtriert und das Filtrat einem Sole-Zwischenbehälter 4 zugeleitet, von wo es zur Rückgewinnung der Umschmelzsalze in den Ofen 7 zum Eindampfen und Kristallisieren eingeführt wird. Das auskristallisierte Salz kann wieder dem Schmelzofen 2 zugeführt werden. Der Filterrückstand, also der ausgewaschene Krätzestaub, wird in den Reaktionsbehälter 1 zurückgeführt und

4. in einer zweiten Verfahrensstufe im Reaktionsbehälter mit zehnprozentiger heißer Schwefelsäure aus einem Dosierbehälter 5 mit etwa 90°C (2 Liter zehnprozentige $H_2SO_4$ für ein Kilogramm Krätzestaub) behandelt.

5. Die schwefelsaure Krätzestaub-Suspension wird wiederum im Vakuumfilter 3 filtriert und das schwefelsaure Filtrat in einen Zwischenbehälter 6 eingeleitet, wo es bis zur Säurefreiheit gewaschen wird.

6. Der Filterrückstand des aufbereiteten Krätzestaubes wird bei 500°C im Ofen 7 getrocknet, kalziniert und wieder partiell in die Elektroylsezelle 8 eingesetzt.

7. Das im Zwischenbehälter 6 gewaschene schwefelsaure Filtrat wird in den Reaktionsbehälter 1 rückgeführt und in einer dritten Verfahrensstufe im Reaktionsbehälter langsam mit einer kalten zehnprozentigen Natronlauge aus einem Dosierbehälter 9 versetzt und solange gerührt, bis ein pH-Wert von 6 bis 7 erreicht ist, um Aluminiumhydroxid auszufällen und um die Restflüssigkeit zur Abwasserbeseitigung zu neutralisieren. Das Magnesiumsulfat bleibt dabei noch in Lösung.

8. Das ausgefällte Aluminiumhydroxid wird im Vakuumfilter 3 aus der Lösung ausgefiltert und im Ofen 7 getrocknet, kalziniert und in die Elektrolysezelle 8 eingesetzt, während das Filtrat in den Zwischenbehälter 6 geleitet und mit dem Magnesiumsulfat als Abwasser abgeführt wird.

Bei der Aufbereitung der Aluminiumkrätze werden die beiden Fraktionen vorteilhaft so getrennt, daß die an Aluminium reiche Fraktion eine Körnung > 1 mm, während der metallarme Krätzestaub eine Körnung < 1 mm aufweist.

Der Aufschluß des Krätzestaubes kann mit einer ein- bis neunzigprozentigen Schwefelsäure erfolgen, wobei sich eine zehnprozentige heiße Schwefelsäure besonders bewährt hat.

Zur Neutralisation des schwefelsauren Filtrates kann eine ein- bis fünfzigprozentige Lauge, vorteilhaft eine fünfprozentige kalte Natronlauge, Verwendung finden. Diese Natronlauge wird dabei langsam und unter Rühren zugeführt, bis ein pH-Bereich von 3 bis 11, vorteilhaft von 6 bis 7, eingestellt ist, um beim Ausfällen des Aluminiumhydroxides ein wirksames Abtrennen der Magnesiumionen zu erreichen.

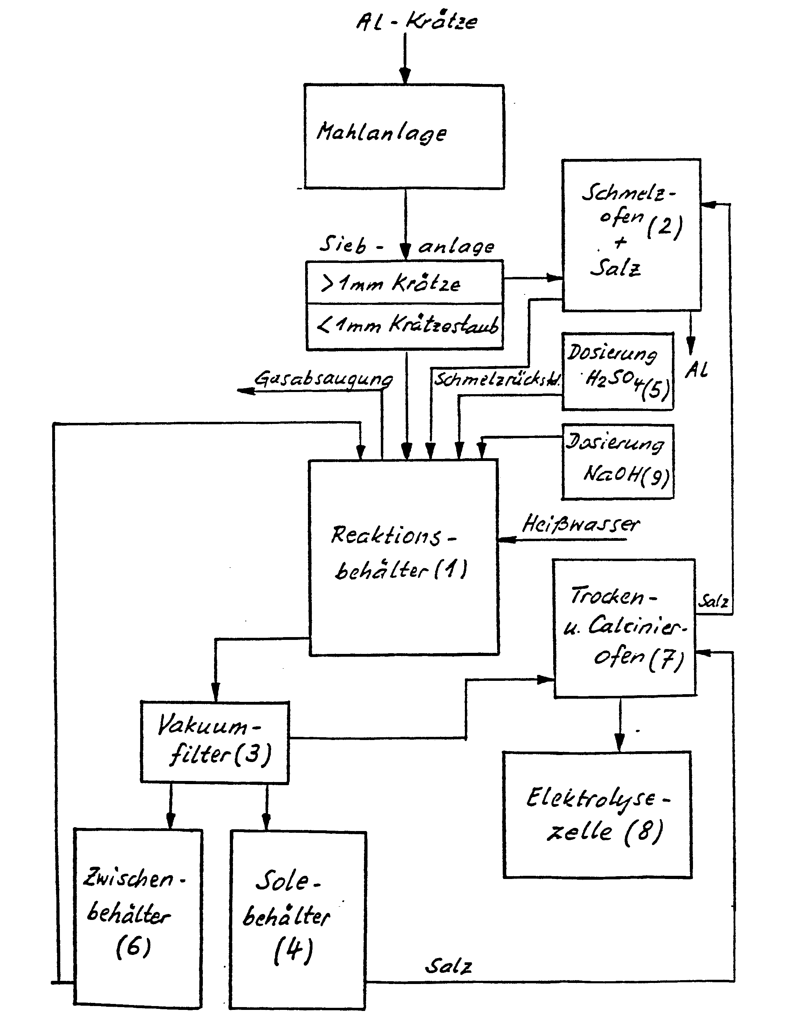

## Patentansprüche

1. Verfahren zur Rückgewinnung von Aluminium aus Krätzen und anderen aluminiumoxidhaltigen Abfällen zum Wiedereinsatz in Schmelzfluß-Elektrolysezellen, wobei

a) die Krätze zunächst durch Zerkleinern in eine grobe, noch viel reines Metall enthaltende Fraktion zum Einschmelzen in einem Salzbad und in eine feine vorwiegend Oxide enthaltende Fraktion, einen Krätzestaub, getrennt wird,

b) dieser Krätzestaub mit salzreichen Rückständen aus einem Schmelzofen (2) in einem Reaktionsbehälter (1) zum Zerlegen der Carbide und Nitride sowie zum Auflösen der Salze mit Heißwasser gewaschen wird,

c) diese Sole filtriert wird, worauf ein dabei ablaufendes Filtrat eingedampft und die auskristallisierten Salze wieder dem Schmelzofen (2) zugeführt werden, während ein zurückbleibender Filterrückstand als ausgewaschener, salzfreier Krätzestaub im Reaktionsbehälter durch Zusatz heißer Schwefelsäure aufgeschlossen wird,

d) hierauf diese schwefelsaure Krätzestaub-Suspension filtriert wird, ein dabei sich ergebendes schwefelsaures Filtrat bis zur Säurefreiheit gewaschen wird, während ein zurückbleibender Filterrückstand getrocknet, kalziniert und dann partiell in die Elektrolysezelle (8) eingesetzt wird,

e) schließlich das säurefrei gewaschene Filtrat, in dem das Aluminium als Aluminiumsulfat gelöst ist, im Reaktionsbehälter unter langsamer Zugabe von Lauge und unter ständigem Rühren neutralisiert wird, wobei Aluminiumhydroxid ausgefällt wird und Magnesiumsulfat in Lösung bleibt und sodann

f) das ausgefällte Aluminiumhydroxid aus dieser Lösung ausgefiltert, getrocknet und kalziniert in die Elektrolysezelle eingesetzt wird, während das als Restflüssigkeit ablaufende Filtrat mit dem gelösten Magnesiumsulfat als Abwasser abgeführt wird.

2. Verfahren nach Anspruch 1, dadurch gekennzeichnet, daß die Fraktionen der zerkleinerten Krätze etwa bei einer Korngröße von 1 mm getrennt werden.

3. Verfahren nach Anspruch 1 oder 2, dadurch gekennzeichnet, daß der salzfrei ausgewaschene Krätzestaub mit einer 1- bis 90 %-igen Schwefelsäure aufgeschlossen wird.

4. Verfahren nach Anspruch 3, dadurch gekennzeichnet, daß der Krätzestaub mit einer 10 %-igen heißen Schwefelsäure aufgeschlossen wird.

5. Verfahren nach einem der Ansprüche 1 bis 4, dadurch gekennzeichnet, daß zur Neutralisation des schwefelsauren Filtrates eine 1- bis 50 %-ige Lauge verwendet wird.

6. Verfahren nach Anspruch 5, dadurch gekennzeichnet, daß zur Neutralisation des schwefelsauren Filtrates eine 5 %-ige kalte Natronlauge verwendet wird.

7. Verfahren nach einem der Ansprüche 1 bis 6, dadurch gekennzeichnet, daß zum Abtrennen der Magnesiumionen beim Ausfällen von Aluminiumhydroxid ein pH-Bereich von 3 bis 11 durch langsamen Zusatz von 5 %-iger kalter Natronlauge unter Rühren eingestellt wird.

8. Verfahren nach Anspruch 7, dadurch gekennzeichnet, daß ein pH-Bereich von 6 bis 7 eingestellt wird.

## Claims

1. A method of recovering aluminium from dross and other aluminium oxide containing waste for re-use in fusion electrolysis cells, in which

a) the dross is firstly by comminution separated into a coarse fraction which sill contains a lot of pure metal, to be fused in a salt bath, and a fine fraction which mainly contains oxides, a dross dust,

b) this dross dust with salt-rich residues from a fusion furnace (2) is washed with hot water in a reaction container (1) to decompose the carbides and nitrides and to dissolve the salts,

c) this brine is filtered, a filtrate which runs off in the process being evaporated, the salts crystallised out being fed back to the smelting furnace (2) while a remaining filter residue is disintegrated as a washed out salt-free dross dust in the reaction container by the addition of heated sulphuric acid,

d) then this sulphuric dross dust suspension is filtered, a sulphuric filtrate which results is washed until it is free from acid while a remaining filter residue is dried, calcined and then partially fed to the electrolysis cell (8),

e) finally the filtrate which has been washed free from acid and in which the aluminium is dissolved as an aluminium sulphate, is neutralised in the reaction container, lye being added slowly, attended by constant agitation, during which aluminium hydroxide is precipitated, magnesium sulphate remaining in solution, whereupon

f) the precipitated aluminium hydroxide is filtered out of this solution, dried and calcined and introduced into the electrolysis cell, while filtrate running off as a residual fluid is discharged with the dissolved magnesium sulphate as waste.

2. A method according to claim 1, characterised in that the fractions of reduced dross are separated substantially at a granulation of 1 mm.

3. A method according to claim 1 or 2, characterised in that the salt-free washed out dross dust is decomposed with 1 to 90 % sulphuric acid.

4. A method according to claim 3, characterised in that the dross dust is disintegrated with a 10 % heated sulphuric acid.

5. A method according to one of Claims 1 to 4, characterised in that to neutralise the sulphuric filtrate a 1 to 50 % lye is used.

6. A method according to Claim 5, characterised in that to neutralise the sulphuric filtrate a 5 % cold caustic soda solution is used.

7. A method according to one of Claims 1 to 6, characterised in that to separate off the magnesium ions during precipitation of aluminium hydroxide a pH range of 3 to 11 is adjusted by a slow addition of 5 % cold caustic soda solution accompanied by agitation.

8. A method according to Claim 7, characterised in that a pH range of 6 to 7 is adjusted.


**Revendications**

1. Procédé pour récupérer l'aluminium de crasses et d'autres déchets contenant de l'oxyde d'aluminium pour l'utiliser à nouveau dans des cellules d'électrolyse ignée, dans lequel

a) on sépare tout d'abord la crasse, par fragmentation, en une fraction grossière, contenant encore beaucoup de métal pur, à faire fondre dans un bain de sels, et en une fraction fine contenant surtout des oxydes et qui est une poussière de crasses,

b) on soumet cette poussière de crasses, contenant des résidus riches en sel(s), provenant d'un four (2) de fusion, à un lavage à l'eau chaude dans un réacteur (1) pour décomposer les carbures et nitrures et aussi pour dissoudre les sels,

c) on filtre cette saumure, avec concentration par évaporation du filtrat qui s'en écoule et acheminement à nouveau des sels, séparés par cristallisation, vers le four (2) de fusion, cependant que l'on soumet un résidu restant de la filtration, sous forme d'une poussière de crasses ayant subi une extraction par lavage et dépourvue de sels, à un traitement de dissolution dans un réacteur, par addition d'acide sulfurique chaud,

d) on filtre ensuite la suspension de la poussière de crasses dans de l'acide sulfurique, on lave un filtrat ainsi obtenu, contenant de l'acide sulfurique, jusqu'à absence d'acide, cependant qu'on sèche un résidu demeuré sur filtre, on calcine ce résidu et on l'achemine partiellement dans la cellule (8) d'électrolyse,

e) on neutralise enfin dans le réacteur, avec lente addition d'une lessive alcaline et sous agitation constante, le filtrat, lavé jusqu'à absence d'acide et dans lequel l'aluminium est dissous sous forme de sulfate d'aluminium, la neutralisation provoquant la précipitation de l'hydroxyde d'aluminium cependant que le sulfate de magnésium demeure en solution, puis

f) on sépare par filtration de cette solution l'hydroxyde d'aluminium précipité, on le sèche et on le calcine et on l'achemine dans la cellule d'électrolyse, cependant que le filtrat qui s'écoule sous forme de liquide résiduel et contient le sulfate de magnésium dissous est évacué comme eau résiduaire.

2. Procédé selon la revendication 1, caractérisé en ce que les fractions de la crasse fragmentée sont séparées à une grosseur de grain d'environ 1 mm.

3. Procédé selon la revendication 1 ou 2, caractérisé en ce que la poussière de crasses, extraite par lavage jusqu'à absence de sel, est soumise à dissolution dans un acide sulfurique à 1 jusqu'à 90 % d'acide.

4. Procédé selon la revendication 3, caractérisé en ce que l'on dissout la poussière d'acide en utilisant un acide sulfurique, chaud, à 10 % d'acide.

5. Procédé selon l'une des revendications 1 à 4, caractérisé en ce que, pour neutraliser le filtrat contenant de l'acide sulfurique, on utilise une lessive alcaline à 1 à 50 %

6. Procédé selon la revendication 5, caractérisé en ce que, pour neutraliser le filtrat contenant de l'acide sulfurique, on utilise une lessive froide de soude à 5 %.

7. Procédé selon l'une des revendications 1 à 6, caractérisé en ce que, pour séparer les ions magnésium lors de la précipitation de l'hydroxyde d'aluminium, on ajuste à un pH compris entre 3 et 11, par une lente addition, sous agitation, d'une lessive froide de soude à 5 %.

8. Procédé selon la revendication 7, caractérisé en ce qu'on ajuste à un pH compris entre 6 et 7.

Al - Krätze

Mahlanlage

Schmelzofen (2)
+
Salz

Sieb - anlage

>1mm Krätze

<1mm Krätzestaub

Gasabsaugung

Schmelzrückst.

Dosierung
H₂SO₄ (5)

Al

Dosierung
NaOH (9)

Heißwasser

Reaktionsbehälter (1)

Trocken-
u. Calcinierofen (7)

Salz

Vakuumfilter (3)

Elektrolysezelle (8)

Zwischenbehälter
(6)

Solebehälter
(4)

Salz

1